# EUROPÄISCHE PATENTSCHRIFT

(11) **EP 1 958 314 B1**
(45) Veröffentlichungstag und Bekanntmachung des Hinweises auf die Patenterteilung: **26.06.2013**
(21) Anmeldenummer: 06819494.3
(22) Anmeldetag: 15.11.2006
(51) Int. Cl.: H02K 7/102, F16D 65/14

(54) **SPERRVORRICHTUNG, GETRIEBE-ANTRIEBSEINHEIT BEINHALTEND EINE SOLCHE SPERRVORRICHTUNG, SOWIE VERFAHREN ZUM HERSTELLEN EINER SOLCHEN GETRIEBE-ANTRIEBSEINHEIT**
BLOCKING APPARATUS, GEARBOX DRIVE UNIT CONTAINING A BLOCKING APPARATUS SUCH AS THIS, AS WELL AS A METHOD FOR PRODUCTION OF A GEARBOX DRIVE UNIT SUCH AS THIS
DISPOSITIF DE BLOCAGE, UNITÉ D ENTRAÎNEMENT À ENGRENAGE COMPRENANT UN TEL DISPOSITIF DE BLOCAGE ET PROCÉDÉ POUR FABRIQUER UNE TELLE UNITÉ D ENTRAÎNEMENT À ENGRENAGE

(30) Priorität: 29.11.2005 DE 102005057239; 18.04.2006 DE 102006018094
(43) Veröffentlichungstag der Anmeldung: 20.08.2008
(73) Patentinhaber: ROBERT BOSCH GMBH, 70442 Stuttgart (DE)
(72) Erfinder: RETTMAR, Ulrich, 77830 Buehlertal (DE); KLOBES, Peter, 76467 Bietigheim (DE)
(86) Internationale Anmeldenummer: PCT/EP2006/068483
(87) Internationale Veröffentlichungsnummer: WO 2007/062981

(56) Entgegenhaltungen:
- DE-U1- 29 706 124
- FR-A- 2 588 702
- FR-A1- 2 785 656
- GB-A- 2 258 702
- JP-A- 10 019 065
- JP-U- 4 098 858
- US-A- 6 155 386

## Beschreibung

### Stand der Technik

Die Erfindung betrifft eine Sperrvorrichtung mit zwei verschiebbar zueinander angeordneten Sperrelementen, sowie eine Getriebe-Antriebseinheit beinhaltend eine solche Sperrvorrichtung und ein Verfahren zum Herstellen einer solchen Getriebe-Antriebseinheit nach der Gattung der unabhängigen Ansprüche.

Mit der EP 1 320 175 A2 ist eine Antriebs- und/oder Abbremsvorrichtung bekannt geworden, bei der eine Bremseinheit innerhalb eines Gehäuses angeordnet ist, das einen Elektromotor umschließt. Die Bremseinheit weist eine Bremsscheiben und einen Bremskörper auf, die elektromagnetisch reibschlüssig gegeneinander anpressbar sind. Dabei ist der Bremskörper drehfest und axial fixiert mit dem Gehäuse des Elektromotors verbunden, während die Bremsscheibe axial verschiebbar auf der drehbar gelagerten Ankerwelle des Elektromotors angeordnet ist.

Eine derart ausgestaltete Bremsvorrichtung hat den Nachteil, dass bei der Montage der Antriebseinheit viele Toleranzen ausgeglichen werden müssen, da beim Zusammenbau der Bremskörper direkt am Gehäuse und die Bremsscheibe auf der Ankerwelle vormontiert werden, und erst anschließend zusammengebaut und zueinander justiert werden. Außerdem ist der Reibschluss zwischen den beiden Bremsscheiben sehr anfällig gegenüber Verschleiß und äußeren Einflüssen wie Schmutz, Kohlestaub, Fett und Erschütterungen, weshalb in der EP 1 320 175 A1 das Gehäuse des Elektromotors auch wasser-, luft- und staubdicht abgeschlossen sein muss. Des Weiteren verursacht eine solche Vorrichtung beim Betätigen relativ laute Geräusche, die von Insassen eines Kraftfahrzeugs als störend empfunden werden können.

Mit der FR 2785656 A1 und der FR 2588702 A sind jeweils elektromotorische Antriebseinheiten bekannt geworden, die eine Sperrvorrichtung aufweisen. Hierzu sind jeweils zwei scheibenförmige Sperrelemente drehbar zueinander angeordnet, wobei die beiden Sperrelemente einen axialen Formschluss aufweisen, der im gesperrten Zustand ein Verdrehen der beiden Sperrelemente gegeneinander verhindert.

### Offenbarung der Erfindung

### Vorteile der Erfindung

Die erfindungsgemäße Getriebe-Antriebseinheit, und die darin angeordnete Sperrvorrichtung, sowie das Verfahren zur Herstellung einer solchen Getriebe-Antriebseinheit haben den Vorteil, dass durch die Ausbildung der Sperrvorrichtung als eigenständiges, komplett montierbares Modul der Montageaufwand für eine solche Getriebe-Antriebseinheit deutlich reduziert wird. Dabei ist keine hohe Montagegenauigkeit des Mitnehmers auf der Welle gegenüber der Sperrvorrichtung und keine hohe Positionsgenauigkeit der Sperrvorrichtung im Gehäuse der Getriebe-Antriebseinheit erforderlich. Die axialen Toleranzen (Luftspalt) zwischen den Sperrelementen können bei der separaten Herstellung und unabhängigen Funktionsprüfung der Sperrvorrichtung mit deutlich weniger Aufwand eingehalten werden. Durch die Ausbildung eines axialen Formschlusses zwischen den beiden Sperrelementen ist die Sperrvorrichtung viel unempfindlicher gegenüber Schmutz und Fett oder Feuchtigkeit oder Kohlestaub. Durch den minimalen Verschleiß, bzw. Abrieb der Sperrelemente erhöht sich die Lebensdauer und die Dauerbelastbarkeit der Sperrvorrichtung. Aufgrund der Ausbildung des axialen Formschlusses zwischen den beiden Sperrelementen, beispielsweise in Form einer axialen Verzahnung (radial angeordnete Rillen mit darin eingreifenden Zähnen), eignet sich die Sperrvorrichtung auch für den Einsatz im Kraftfahrzeug, bei dem erhöhte Schwingungs- und Schüttelbelastungen auftreten. Im Gegensatz zu der Anordnung von Bremsscheiben, ist die Erfindung unempfindlich gegenüber einer Resonanzfrequenz des Feder-Masse-Systems, die durch die Schwingungen im Fahrzeug angeregt wird. Durch die Anordnung eines Dämpfungselements zwischen dem Elektromagneten und dem zweiten Sperrelement kann die Körperschallanregung beim Lösen der Sperre wirkungsvoll unterbunden werden.

Durch die in den Unteransprüchen aufgeführten Merkmale sind vorteilhafte Weiterbildungen der Vorrichtung und des Verfahren nach dem unabhängigen Ansprüchen möglich. Ist das Dämpfungselement 28 als ein die Welle umschließenden

Ring ausgebildet, wird das zweite Sperrelement über den gesamten Umfang gleichmäßig beim Anschlag gegen den Elektromagneten gedämpft. Der Ring kann vorteilhaft einteilig ausgebildet werden und aufgrund seiner Ausdehnung über den gesamten Umfang einfach befestigt werden.

Zur effektiven Unterdrückung des Körperschalls wird das Dämpfungselement am günstigsten aus einem Kunststoff, vorzugsweise aus einem Elastomer ausgebildet, das den Körperschall über einen großen Temperaturbereich wirkungsvoll absorbieren kann.

Ist das Dämpfungselement als O-Ring oder D-Ring ausgebildet, kann dieser einfach in eine korrespondierende Nut am Elektromagneten oder am zweiten Sperrelement eingedrückt werden. Der Querschnitt des Dämpfungsrings kann dabei kreisförmig, D-förmig, X-förmig, rechteckförmig oder ähnlich ausgebildet werden; derart, dass die axiale Bewegung des zweiten Sperrelements gegenüber dem Magneten abgebremst wird.

Der Elektromagnet weist einen Innenpol auf, auf dem ein Spulenkörper gelagert ist und die beide zusammen eine axiale Stirnfläche bilden, an der das Dämpfungselement fest fixiert werden kann.

Um eine Körperschallanregung auch beim Schließen der Sperrvorrichtung zu reduzieren, ist zwischen den beiden Sperrelementen mindestens ein zusätzliches Dämpfelement angeordnet, das den Anschlag des zweiten Sperrelements am ersten Sperrelement durch die Rückstellfeder abbremst.

An der axialen Stirnfläche des Elektromagneten kann vorteilhaft eine Rundung angeformt sein, an der das zweite Sperrelement beim Lösen der Sperrvorrichtung anschlägt. Durch die Ausformung der Rundung kommt das zweite - sich verformenden - Sperrelement kontinuierlich zum Anliegen am Elektromagneten, wodurch die Körperschallanregung deutlich reduziert wird.

Besonders günstig ist es, das Dämpfungselement als Kunststoff-Folie auszubilden, die insbesondere als Klebefolie selbstklebend an einer der beiden axialen Stirnflächen aufgeklebt werden kann.

In einer bevorzugten Ausführung wird das ringförmige Dämpfungselement mittels einer Ringfeder gegen die Stirnseite des Elektromagneten oder des zweiten Sperrelements gepresst. Von Vorteil ist es dabei, wenn hierfür die ohnehin vorhandene Rückstellfeder für das zweite Sperrelement gleichzeitig für die Fixierung des Dämpfungselements verwendbar ist.

In einer alternativen Ausführung ist an die Rückstellfeder direkt ein elastisches Dämpfelement angeformt, beispielsweise angespritzt. Dieses kann als Ummantelung einer oder mehrerer Windungen einer Spiralfeder, oder als Formteil ausgebildet sein. Dadurch entfällt ein separater Befestigungsprozess für das Dämpfungselement.

Wird als Ringfeder eine konische Spiralfeder verwendet, ist dadurch eine saubere axiale Führung des zweiten Sperrelements gewährleistet, ohne dass hierfür zusätzlicher Bauraum in axialer Richtung benötigt wird. Die Spiralfeder kann besonders günstig an einem axialen Versatz zwischen dem Innenpol und dem Spulenkörper anliegen, wodurch die Spiralfeder radial fixiert ist.

Bildet der Innenpol mit dem Spulenkörper einen solchen axialen Versatz, so kann das Dämpfungselement vorteilhaft als hutförmige Kappe über dem Innenpol und dem Spulenkörper angeordnet werden, sodass die hutförmige Kappe am axialen Versatz radial anliegt.

Bevorzugt wird ein solches Dämpfungselement aus Teflon hergestellt und weist optional als Anschlagsfläche eine axiale Profilierung auf, die den Anschlag des zweiten Sperrelements akustisch dämpft.

In einer alternativen Ausführung ist das Dämpfungselement in das zweite Sperrelement integriert. Hierzu wird bevorzugt ein Verbundwerkstoff als Basisteil für das zweite Sperrelement verwendet, das mindestens eine Kunststoffschicht und ein Metallblech aufweist. Durch die feste Anbindung der viskoseelastischen Kunststoffschicht an das Metallblech werden angeregte Körperschwingungen im akustischen Bereich wirkungsvoll unterbunden.

Das zweite Sperrelement kann dabei besonders einfach hergestellt werden, indem an eine Basisplatte aus dem Verbundblech direkt ein axialer Formschluss angespritzt wird, der in das erste Steuerelement eingreift.

Dabei ist das Basisteil des zweiten Sperrelements gleichzeitig als Ankerblech für den magnetischen Rückschluss des Elektromagneten ausgebildet. Da das Verbundblech zumindest ein oder zwei Metallbleche aufweist, ist auch ein solches zweites Sperrelement mit integriertem Dämpfungselement als magnetisches Ankerblech geeignet.

Besonders einfach kann das zweite Sperrelement axial geführt werden, indem dieses axiale Ausformungen aufweist, die in entsprechende axiale Führungselemente des Spulenträgers, bzw. Innenpol des Elektromagneten eingreifen. Dadurch sind keine zusätzlichen Bauteile notwendig, da die axialen Führungs-, bzw. Gegenführungselemente jeweils einstückig an den Elektromagneten bzw. an das zweite Sperrelement, angeformt werden können.

Vorteilhaft ist es, die Sperrvorrichtung derart zu betreiben, dass während des Betriebszustands der mindestens eine Elektromagnet aktiviert wird, so dass dieser das zweite Sperrelement axial vom ersten Sperrelement entgegen einer Rückstellkraft weg zieht. Dadurch kann sich die Antriebswelle im bestromten Zustand des Elektromagneten ungestört drehen. Im deaktivierten Zustand des Elektromagneten (unbestromt) wird dann das zweite Sperrelement aufgrund der Anpresskraft durch das Rückstellelement gegen das erste Sperrelement gepresst, um die Drehbewegung im Sperrzustand zu blockieren.

Wird das zweite Sperrelement im Drehzustand von dem Elektromagneten angezogen, liegt das Sperrelement am Dämpfungselement an, das sich wiederum am Elektromagneten abstützt. Dadurch wird eine Resonanzbildung der akustischen Schwingungen vermieden.

Durch die Ausformung einer Aussparung in der als Polrohr des Elektromagneten ausgebildeten Zylinderwand radial gegenüberliegend zum Anschluss-Stecker des Elektromagneten, kann über den gesamten Umfang eine gleichmäßige axiale Anziehung des zweiten Sperrelements erzeugt werden. Dadurch wird ein Verkanten oder Verhaken des zweiten Sperrelements bei dessen Betätigung verhindert, wodurch dieses mit geringerer Wucht gegen das Dämpfungselement schlägt und damit die Geräuschbildung reduziert wird.

Wird die erfindungsgemäße Sperrvorrichtung in eine Getriebe-Antriebseinheit verbaut, dreht sich das erste Sperrelement mit der Welle mit, wobei sich das erste Sperrelement in beiden axialen Richtungen an der Sperrvorrichtung ab. Um eine gegenseitige Berührung der beiden Sperrelemente zu vermeiden, stützt sich das erste drehbare Sperrelement an einer als Anlaufscheibe ausgebildeten axialen Seite des Sperrengehäuses ab. Hierzu weist das erste Sperrelement axiale Fortsätze auf, die eine Anlaufscheibe des Sperrengehäuses hintergreifen.

Das erfmdungsgemäße Verfahren zur Herstellung einer erfindungsgemäßen Getriebe-Antriebseinheit hat den Vorteil, dass aufgrund der separaten Ausbildung der Sperrvorrichtung diese mit den beiden Sperrelementen ohne hohe Toleranzanforderungen einfach in das Gehäuse und auf die Antriebswelle montiert werden kann. Dazu wird die Antriebswelle in einem Mitnehmer eingeführt, der einen Formschluss mit dem ersten Sperrelement zur Drehmomentübertragung hergestellt. Die Montage der Sperrvorrichtung in das Gehäuse der Antriebseinheit erfolgt besonders günstig durch Einpressen und anschließender Axialsicherung mittels Materialumformung. Die axiale Positionierung der Sperrvorrichtung ist dabei unkritisch, da der Abstand der beiden Sperrelemente durch die Anschläge des Sperrengehäuse, bzw. der Antriebswelle justiert werden.

Zur Herstellung der separat montierbaren Sperrvorrichtung ist es besonders günstig, die beiden Sperrelemente mit dem Elektromagnet und dem Rückstellelement und das Dämpfungselement innerhalb eines Sperrengehäuses zu montieren, das dann wiederum einfach in das Gehäuse der Getriebe-Antriebseinheit montiert werden kann. Das Sperrengehäuse nimmt dabei die auf die Sperrvorrichtung einwirkenden Kräfte auf und leitete sie an den Gehäusen der Getriebe-Antriebseinheit ab. Gleichzeitig schützt das Sperrengehäuse, wenn es bspw. näherungsweise geschlossen ausgebildet ist, die Sperrelemente vor Schmutz. Durch die komplette Vormontage der Sperrvorrichtung mit den beidem Sperrelementen, den Elektromagneten, dem mindestens einen Rückstellelement und dem Dämpfungselement kann diese als separate Baueinheit ausgebildete Sperrvorrichtung von einem Veferanten unabhängig gefertigt und auf deren Funktion und Leistungsaufnahme überprüft werden. Dadurch wird die Montage und die Funktionsprüfung der Getriebe-Antriebseinheit wesentlich vereinfacht.

### Zeichnungen

In den Zeichnungen sind verschiedene Ausführungsbeispiele einer Sperrvorrichtung, sowie einer Getriebe-Antriebseinheit dargestellt und in der nachfolgenden Beschreibung näher erläutert. Es zeigen
- Figur 1: einen Schnitt durch eine in eine Getriebe-Antriebseinheit eingebaute Sperrvorrichtung,
- Figur 2: eine axiale Ansicht der Sperrvorrichtung aus Figur 1,
- Figur 3: einen Schnitt durch die Sperrvorrichtung aus Figur 2 gemäß III-III,
- Figur 4: einen Schnitt durch ein weiteres Ausführungsbeispiel einer Sperrvorrichtung,
- Figur 5: eine weitere Variation des zweiten Sperrelements gemäß Figur 4,
- Figur 6: die erfindungsgemäße Dämpfungselemente,
- Figur 7: eine weitere Variation einer Sperrvorrichtung, und
- Figur 8: ein weiteres Dämpfungselement

### Beschreibung der Ausführungsbeispiele

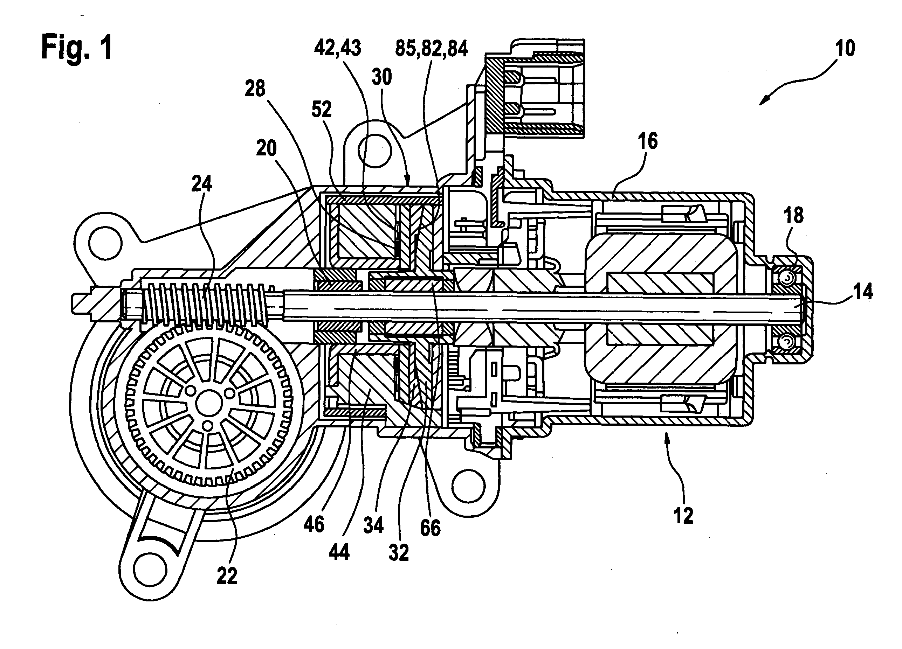

In Figur 1 ist eine Getriebe-Antriebseinheit 10 dargestellt, bei der ein Elektromotor 12 mit einer Antriebswelle 14 innerhalb eines Gehäuses 16 der Getriebe-Antriebseinheit 10 angeordnet ist. Die Antriebswelle 14 ist mittels eines Wälzlagers 18 und/oder eines Gleitlagers 20 gelagert und weist eine Schnecke 24 auf, die bspw. über ein Schneckenrad 22 mit einem nicht dargestellten Stellglied eines beweglichen Teils im Kraftfahrzeug zusammenwirkt. Um die Antriebswelle 14 gegenüber dem Gehäuse 16 zu blockieren, ist im Gehäuse 16 eine Sperrvorrichtung 30 angeordnet, die ein erstes Sperrelement 32 und ein zweites Sperrelement 34 aufweist. Das erste Sperrelement 32 greift formschlüssig in einen Mitnehmer 66, der drehfest auf der Ankerwelle 14 angeordnet ist Das zweite Sperrelement 34 hingegen ist drehfest mit dem Gehäuse 16 verbunden. Im Sperrzustand (wie in Fig. 1 darstellt) greift das erste Sperrelement 32 formschlüssig in das zweite Sperrelement 34, wodurch eine Drehung der Antriebswelle 14 verhindert wird. Hierzu weisen die beiden Sperrelemente 32, 34 radial verlaufende Rillen 82 und Erhöhungen 84 auf, die einen axialen Formschluss 85 bilden und entsprechend einer axialen Verzahnung 85 mittels mindestens einem federnden Rückstellelement 42 ineinander gepresst werden. Im Ausführungsbeispiel sind die formschlüssig ineinander greifenden Flächen der Sperrelemente 32, 34 unter einem Winkel von kleiner, bzw. größer als 90° gegenüber der Welle 14 angeordnet. Das zweite Sperrelement 34 ist mit einem Elektromagneten 44 wirkverbunden, der in bestromten Zustand des zweite Sperrelement 34 entgegen der Federkraft des Rückstellelement 42 axial vom ersten Sperrelement 32 wegzieht, derart, dass sich der axiale Formschluss 85 löst, und sich die beiden Sperrelemente 32 und 34 berührungslos gegeneinander verdrehen lassen. Der Elektromagnet 44 ist in einem Spulenträger 46 gelagert, der einerseits drehfest mit dem Gehäuse 16 verbunden ist und andererseits axiale Führungselemente 78 aufweist, die mit entsprechenden axialen Gegenführungen 80 des zweiten Sperrelements 34 zusammenwirken. Dadurch ist gewährleistet, dass beim Anlegen eines Stroms an den Elektromagneten 44 sich die Sperrvorrichtung 30 im Drehzustand befindet, wohingegen der stromlose Zustand dem Sperrzustand entspricht. Dabei bildet die Sperrvorrichtung 30 eine separate vormontierte Baueinheit 31, die zumindest die beiden Sperrelement 32, 34 und den Elektromagneten 44 umfasst. In Figur 1 sind diese in einem Sperrengehäuse 52 der Sperrvorrichtung 30 angeordnet, wobei das Sperrengehäuse 52 axial in das Gehäuse 16 eingepresst und gegen ein Verschieben gesichert ist. Zwischen dem zweiten Sperrelement 34 und dem Elektromagneten 44 ist mindestens ein Dämpfungselement 28 angeordnet, das beim Anschlagen des zweiten Sperrelements 34 gegen am Elektromagneten 44 eine störende Geräuschbildung unterbindet.

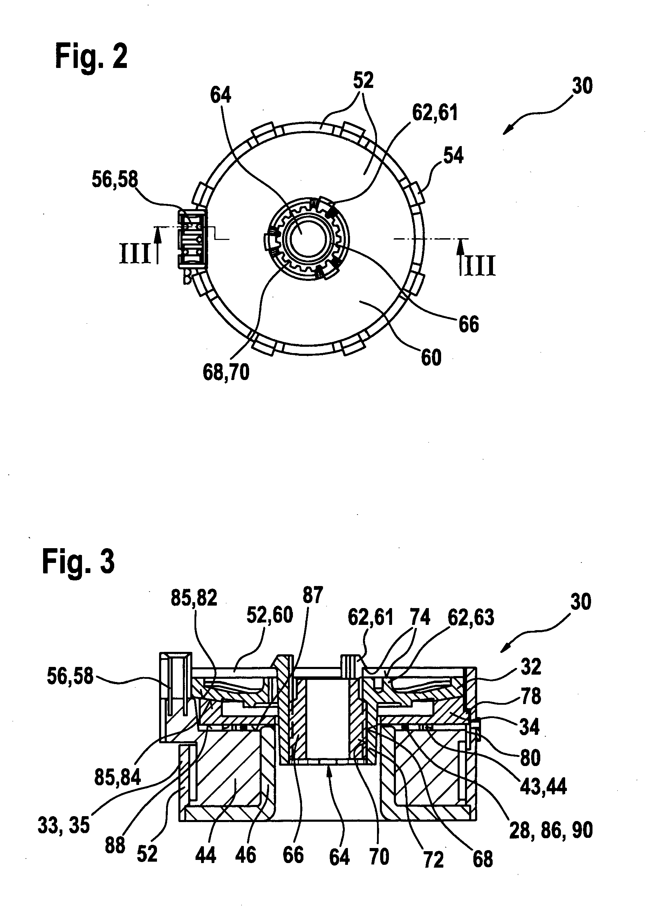

Figur 2 zeigt eine Ansicht der separat ausgebildeten Sperrvorrichtung 30 in Axialrichtung vor dem Einbau in die Getriebe-Antriebseinheit 10. Die beiden Sperrelemente 32 und 34, sowie der Elektromagnet 44 sind in dem Sperrengehäuse 52 angeordnet. Das Sperrengehäuse 52 ist zylinderförmig ausgebildet und weist an seinem Umfang radiale Rastelemente 54 auf, die sich beim Einbau in das Gehäuse 16 an diesem festkrallen. Am Umfang des Sperrengehäuses 52 ist als elektrische Kontaktierung 56 des Elektromagneten 44 ein Steckerelement 58 angeordnet, das unabhängig vom Motorstrom des Elektromotors 12 bestromt werden kann. Die Stirnseite des Sperrengehäuses 52 ist als Anlaufscheibe 60 ausgebildet, an der sich das erste Sperrelement 32 über axiale Fortsätze 62 axial abstützt. Das erste Sperrelement 32 ist als Scheibe mit einer zentralen Öffnung 64 ausgebildet, die formschlüssig in einen Mitnehmer 66 eingreift. Die formschlüssige Verbindung wird im Ausführungsbeispiel durch eine Innenverzahnung 68 des ersten Sperrelemente 32 gebildet, die axial auf eine Außenverzahnung 70 des Mitnehmers 66 aufgeschoben wird. Bei der Montage der Getriebe-Antriebseinheit 10 wird hierbei der Mitnehmer 66 zuerst drehfest auf der Antriebswelle 14 befestigt, und anschließend die Antriebswelle 14 mit dem Mitnehmer 66 axial in die Öffnung 64 der Sperrvorrichtung 30 eingeschoben. Da das erste Sperrelement 32 innerhalb des Sperrengehäuses 52 axial abgestützt wird, ist die axiale Positionierung der Antriebswelle 14 zur Sperrvorrichtung 30 toleranzunempfindlich.

Figur 3 zeigt einen Schnitt gemäß III-III der Sperrvorrichtung 30 in Figur 2, wobei zur Veranschaulichung der Mitnehmer 66 ohne Antriebswelle 14, im formschlüssigen Eingriff mit dem ersten Sperrelement 32 dargestellt ist. Das erste Sperrelement 32 weist an seiner zentralen Öffnung 64 eine Hülse 72 auf, an der die Innenverzahnung 68 angeformt ist. Zur axialen Abstützung gegenüber der Innenwand der Anlaufscheibe 60 weist das Sperrelement 32 als axiale Fortsätze 62 einen umlaufenden Steg 63 auf, der sich an dem drehfesten Anschlag 74, der durch die Innenwand der Anlaufscheibe 60 gebildet wird, abstützt. Zur Abstützung bezüglich des Elektromagneten 44 weist das erste Sperrelement 32 weitere axiale Fortsätze 62 auf, die als Rasthaken 61 ausgebildet sind und durch die zentrale Öffnung 64 der Anlaufscheibe 60 hindurch, an der - einen weiteren Anschlag 74 bildenden - Außenwand der Anlaufscheibe 60 anliegen. Die Rasthaken 61 sind gegenüber der Hülse 72 freigespart, damit sie flexibel durch die Öffnung 64 eingeschoben werden können und anschließend sicher einrasten. Auf diese Weise ist das erste Sperrelement 32 auf einfache Weise zuverlässig gegen eine axiale Verschiebung innerhalb des Sperrengehäuses 52 gesichert. In einer alternativen ,nicht dargestellten Ausführung stützten sich die axialen Fortätze 62 mittels Materialumformung an der Außenseite der Anlaufscheibe 60 ab oder die axialen Fortsätze 62 sind als Dom ausgebildet, der sich mittels eines Klemmrings an der Anlaufscheibe 60 abstützt. Der Elektromagnet 44 ist auf dem Spulenträger 46 angeordnet, der gleichzeitig ein Teil des Sperrengehäuses 52 bildet. Das zweite Sperrelement 34 ist über axiale Führungselemente 78 drehfest im Sperrengehäuse 52 angeordnet, wobei die Führungselemente 78 mit entsprechenden Gegenelementen 80 des Sperrengehäuses 52 zusammenwirken. Im Sperrzustand wird das als Scheibe ausgebildete zweite Sperrelement 34 durch das Rückstellelement 42 formschlüssig gegen das erste Sperrelement 32 gedrückt. Wird der Elektromagnet 44 bestromt, wird das Sperrelement 34 durch die magnetische Kraft in Figur 3 nach unten gezogen, wodurch sich der Formschluss 85 des Sperrzustands löst und sich das erste Sperrelement 32 reibungslos gegenüber dem zweiten Sperrelement 34 drehen lässt. Das Rückstellelement 42 ist bspw. aus mehreren Federelementen 43 oder als ein die zentrale Öffnung 64 umschließendes einförmiges Federelement 43 gebildet. Das Dämpfungselement 28 ist als Dämpfungsring 86 aus Kunststoff, insbesondere aus einem Elastomer ausgebildet, der in eingebautem Zustand die Antriebswelle 14 umschließt. Der Dämpfungsring 86 ist dabei an der dem Elektromagneten 44 zugewandten axialen Fläche 88 des zweiten Sperrelements 34 oder direkt am Elektromagneten 44 befestigt. Zur Ausbildung eines axialen Formschlusses 85 im Sperrzustand weisen die Sperrelemente 32 und 34 jeweils radial verlaufende Vertiefungen 82 und Erhöhungen 84 auf, die bspw. als axiale Verzahnung 85 ausgebildet sind.

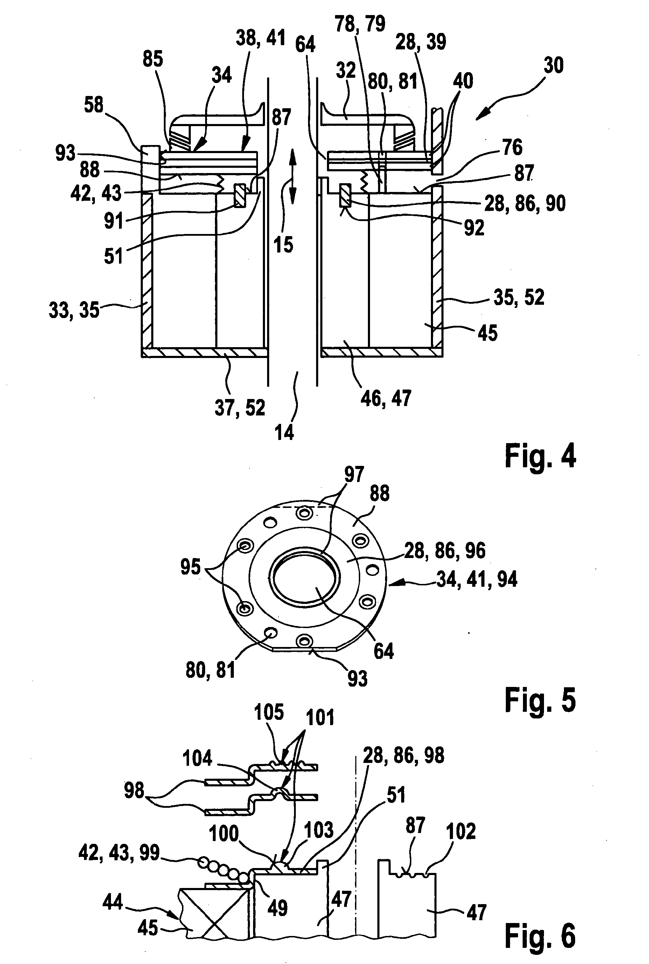

In Figur 4 ist ein weiteres Ausführungsbeispiel einer Sperrvorrichtung 30 dargestellt. Der Spulenträger 46 des Elektromagneten 44 ist als Innenpol 47 ausgebildet, auf dem der Spulenkörper 45 angeordnet ist. Das Sperrengehäuse 52 weist eine Zylinderwand 35 auf, die beispielsweise mit einer separat gebildeten Bodenfläche 37 des Sperrengehäuses 52 verbunden, insbesondere verprägt, ist. Der Innenpol 47 bildet zusammen mit der Bodenfläche 37 und der Zylinderwand 35 und dem zweiten Sperrelement 34 als Ankerblech 41 einen magnetischen Rückschluss für den Spulenkörper 45 des Elektromagneten 44. Das zweite Sperrelement 34 ist in diesem Ausführungsbeispiel aus einem körperschalldämpfenden Verbundblech 38 gebildet, bei dem eine Kunststoffschicht 39 zwischen zwei Metallblechen 40 eingebettet ist. Die Kunststoffschicht 39 weist beispielsweise eine Dicke 0,01 - 0,1 mm auf und ist aus einem viskoseelastischen Material hergestellt, die zur Schwingungsdämpfung an die konkrete Geometrie der Sperrvorrichtung 30 angepasst ist. Damit stellt das Verbundblech 38 mit der Kunststoffschicht 39 ein Dämpfungselement 28 dar, das in das zweite Sperrelement 34 integriert ist. Der axiale Formschluss/Verzahnung 85 wird dabei an das Verbundblech 38 angeformt, beispielsweise direkt aus Kunststoff angespritzt. Die Metallbleche 40 weisen beispielsweise eine Dicke von 0,1 - 2,0 mm auf, wobei als bevorzugtes Material Stahlblech verwendet wird. In einer alternativen - nicht dargestellten - Ausführung weist das Verbundblech 38 nur ein einziges Metallblech 40 und eine einzige Kunststoffscheibe 39 auf. Zusätzlich zu dem in das zweite Sperrelement 34 integrierte Dämpfungselement 28 weist die Sperrvorrichtung 30 ein weiteres Dämpfungselement 28 auf, das als axial dämpfender Dämpfungsring 90 ausgebildet ist. Der Dämpfungsring 90 weist beispielsweise einen rechteckförmigen Querschnitt 91 auf, und ist in eine entsprechende Nut 92 des metallenen Innenpols 47 befestigt. In Figur 4 ist ein Zustand dargestellt, bei dem sich das Sperrelement 34 bei bestromten Elektromagneten 44 gerade aus dem Formschluss 82, 84 gelöst hat aber noch nicht am Dämpfungsring 90 des Innenpols 47 anliegt. Das zweite Sperrelement 34 wird durch die axiale Führungen 78 geführt, die als Führungsbolzen 79 am Spulenkörper 45 angeformt sind und in entsprechende als Gegenelemente 80 ausgeformte axialen Löcher 81 im zweiten Sperrelement 34 eingreifen. Für die Rückstellung des zweiten Sperrelements 34 zur Sperrung des Getriebes sorgt das Rückstellelement 42, das als ringförmiges Federelement 43 ausgebildet ist, das die Antriebswelle 14 umschließt. Wie in Figur 3, weist der Spulenkörper 45 ein Steckerelement 58 auf, das axial in einen entsprechenden Ausschnitt 93 des zweiten Sperrelements 34 greift. Zum Ausgleich des magnetischen Flusses weist die als Polrohr des Elektromagneten 44 dienende Zylinderwand 35 eine Aussparung 76 auf, die das fehlende Wandmaterial der Zylinderwand 35 und/oder des als Ankerblech 41 ausgebildeten zweiten Sperrelements 34 im Bereich des Steckers 58 kompensieren soll.

Figur 5 zeigt ein scheibenförmiges Basisteil 94 des zweiten Sperrelements 34 entsprechend der Ausführung aus Figur 4. Das Basisteil 94 ist als Verbundblech 38 ausgebildet, an dem zum Anspritzen des axialen Formschlusses 85 entsprechende Ausformungen 95 ausgebildet sind. Des Weiteren sind drei Löcher 81 erkennbar, die als Gegenführungselemente 80 für entsprechende Führungsbolzen 79 dienen. Bei dieser Ausführung ist an der axialen Fläche 88 des zweiten Sperrelements 34 als Dämpfungselement 28 eine ringförmige Kunststofffolie 96 befestigt. Die Kunststofffolie 96 ist beispielsweise als Klebefolie ausgebildet, die selbstklebend an der axialen Fläche 88 haftet und beim Heranziehen gegen den Elektromagneten 44 an diesem anliegt. Ein solches als Klebefolie 96 ausgeführtes Dämpfungselement 28 eignet sich ebenfalls zur Kombination mit einem Verbundblech 38, bei dem ein weiteres Dämpfungselement 28 innerhalb des Basisteils 94 des zweiten Sperrelements 34 angeordnet ist. Zum magnetischen bzw. gewichtsmäßigem Ausgleich des Ausschnitts 93 des zweiten Sperrelements 34 können optional korrespondierende - insbesondere radial gegenüberliegende - Abschnitte 97 im Sperrelement 34 ausgespart werden.

In Figur 6 ist ein erfindungsgemäßes Ausführungsbeispiel eines Dämpfungselements 28 dargestellt, das als hutförmige Kappe 98 ausgebildet ist, die am Elektromagneten 44 anliegt. Der Innenpol 47 bildet mit dem Spulenkörper 45 hierbei einen axialen Versatz 49, an dem sich die hutförmige Kappe 98 radial abstützt. Der Innenpol 47 weist zur Antriebswelle 14 hin einen weiteren axialen Fortsatz 51 auf, bis zu dem hin sich die hutförmige Kappe 98 radial erstreckt. Der Fortsatz 51 dient optional auch zur axialen Führung und Zentrierung des zweiten Sperrelements 34. Die Kappe 98 wird mittels eines ringförmigen Federelements 43 axial gegen den Elektromagneten 44 gepresst, wobei das Federelement 43 gleichzeitig als Rückstellelement 42 des zweiten Sperrelements 34 ausgebildet ist. Das Federelement 43 ist hierbei als konische Spiralfeder 99 ausgebildet, die insbesondere im Beriech des axialen Versatzes 49 an der Kappe 98 anliegt. Als Anschlagsfläche 100 für die axiale Fläche 88 des zweiten Sperrelements 34 weist die hutförmige Kappe 98 eine entsprechende Profilierung 101 auf, die entsprechend Figur 6 in verschiedenen Variationen ausgebildet werden kann, um verschiedenen Dämpfungsanforderungen zu genügen. Dabei weist die Profilierung 101 beispielsweise einen Wulst 103, eine axiale Wölbung 104 oder mehrere Rillen 105 auf. Die Kappe 98 ist im Ausführungsbeispiel aus Teflon hergestellt, kann bei Bedarf aber auch aus einem anderen schalldämpfenden Material, z: B. HN BR, hergestellt werden. Zur Besseren Anlage des hutförmigen Dämpfungselements 98 ist an der axialen Seite 87 des Elektromagneten 44 eine Strukturierung 102 (insbesondere Rillen oder Bombardierung) angeformt, die die Wirkung des Dämpfungselements 28 erhöhen soll.

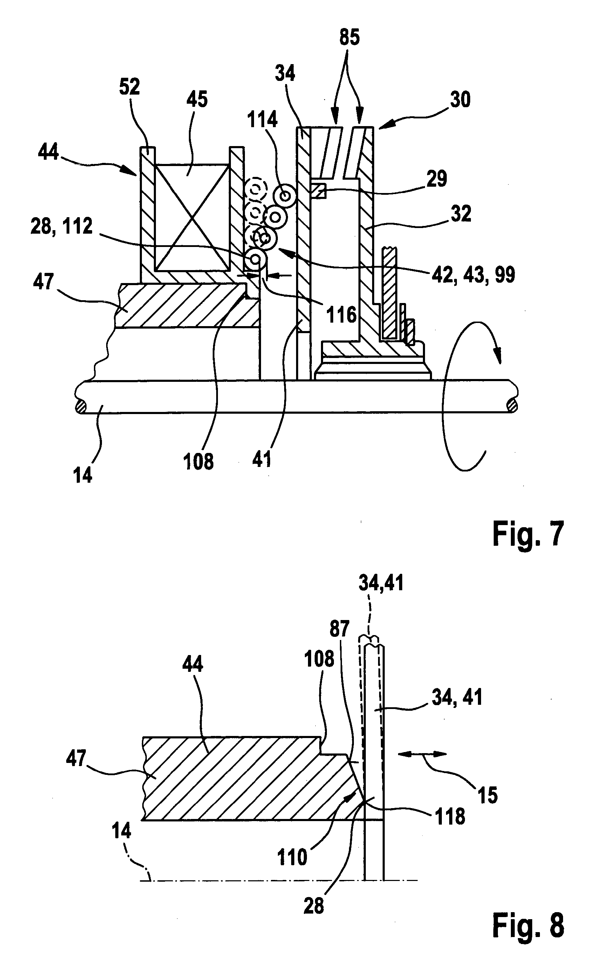

Figur 7 stellt ein weiteres Ausführung einer Sperrvorrichtung 30 in einer Zwischenstellung dar, bei dem das Dämpfungselement 28 direkt an das Rückstellelement 42 angeformt ist. Das Rückstellelement 42 ist als Spiralfeder 99 mit mehreren Windungen 114 ausgebildet, die beim Einschalten des Elektromagneten 44 von dem zweiten Sperrelement 34 gegen den Elektromagneten 44 gepresst werden (gestrichelt dargestellt). Im Beispiel ist das Dämpfungselement 28 als elastische Ummantelung 112 von mindestens einer Windung 114 ausgebildet, so dass bei geöffneter Sperrvorrichtung 30 sowohl das zweite Sperrelement 34 als auch der Elektromagnet 44 an der elastischen Ummantelung 112 - beispielsweise eine Umspritzung mit Elastomer - anliegen, wodurch der Aufprall abgedämpft wird. Zur exakten Einstellung des durch die Dicke 116 des dämpfungselements 28 vorgegebenen Bremswegs ist der Spulenkörper 45 an einem Bund 108 des Innenpols 47 angeordnet, so dass die Toleranzen für den Bremsweg gering gehalten werden. Zwischen dem ersten und dem zweiten Sperrelement 32, 34 ist ein weiteres Dämpfungselement 29 angeordnet, das den Anschlag des zweiten Sperrelements 34 gegen das erste Sperrelement 32 beim Schließen der Sperre dämpft. Dabei kommt das Dämpfungselement 29, das am ersten oder zweiten Sperrelement 32, 34 befestigt ist am gegenüberliegenden Sperrelement 32, 34 zum Anliegen, bevor der Formschluss 85 vollständig ausgebildet ist. Das weitere Dämpfungselement 29 kann ebenso wie das erste Dämpfungselement 28 mit verschiedenen Mitteln, beispielsweise mittels Kleben Clipsen oder Anspritzen befestigt sein.

In Figur 8 ist eine weitere Sperrvorrichtung 30 abgebildet, bei der das Dämpfungselement 28 als am Elektromagneten 44 angeformter Radius 110 ausgebildet ist. Der Radius 110 ist beispielsweise an der axialen Stirnseite 87 des Innenpols 47derart ausgeformt, dass das zweite Sperrelement 34 beim Öffnen der Sperre zuerst mit einem relativ kleinen radial inneren Bereich 118 am Radius 110 anliegt und dann in axialer Richtung 15 elastisch verformt wird (gestrichelt dargestellt) und dem Radius 110 folgend am Elektromagnet 44 anliegt. Dadurch wird der axiale Aufprall des zweiten Sperrelements 34 abgebremst, wodurch die Körperschallanregung unterdrückt wird.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. So kann bspw. die konkrete Ausgestaltung des Formschlusses 85 zwischen dem ersten und zweiten Sperrelement 32, 34, sowie des Dämpfungselements 28 und des Federelements 43 variiert, und den Anforderungen, insbesondere bzgl. Schwingungs-, Rüttel- und Geräuschbelastung, angepasst werden. Bevorzugt wird die erfindungsgemäße Getriebe-Antriebseinheit 10 zur Betätigung eines Differentialgetriebes eines Fahrzeugs verwendet, das bspw. einer Rüttelbelastung von 20 g ausgesetzt ist. Die erfindungsgemäße Sperrvorrichtung 30 kann jedoch auch für andere Elektromotoren 12, wie z.B. Stellantriebe, eingesetzt werden, die einer hohen Temperatur- und Schwingungsbelastung ausgesetzt sind.

## Patentansprüche

1. Sperrvorrichtung (30) zum Sperren einer Drehbewegung einer Welle (14) gegenüber einem Gehäuse (16) einer Getriebe-Antriebseinheit (10), mit einem ersten Sperrelement (32) und einem zweiten Sperrelement (34), das mittels eines Elektromagneten (44) und mindestens einem Rückstellelement (42) verschiebbar gegenüber dem ersten Sperrelement (32) ist, wobei die Sperrelemente (32, 34) im Sperrzustand in Axialrichtung (15) mittels eines Formschlusses (85) ineinander greifen, **dadurch gekennzeichnet, dass** axial zwischen dem Formschluss (85) und dem Elektromagneten (44) mindestens ein akustisches Dämpfungselement (28) angeordnet ist, wobei das Dämpfungselement (28) mittels eines als Ringfeder (43) ausgebildeten Rückstellelements (42) an der axialen Seite (87) des Elektromagneten (44) fixiert ist.

2. Sperrvorrichtung (30) nach Anspruch 1, **dadurch gekennzeichnet, dass** das Dämpfungselement (28) ringförmig ausgebildet ist und die Welle (14) umschließt.

3. Sperrvorrichtung (30) nach einem der Ansprüche 1 oder 2, **dadurch gekennzeichnet, dass** das Dämpfungselement (28) aus Kunststoff - insbesondere aus einem Elastomer - gebildet ist.

4. Sperrvorrichtung (30) nach einem der vorhergehenden Ansprüche, **dadurch gekennzeichnet, dass** das Dämpfungselement (28) als in Axialrichtung (15) dämpfender Dämpfungsring (90) mit einem kreisförmigen, D-förmigen oder X-förmigen Querschnitt ausgebildet ist, der insbesondere in einer Nut (92) an einer axialen Seite (87) des Elektromagneten (44) angeordnet ist.

5. Sperrvorrichtung (30) nach einem der vorhergehenden Ansprüche, **dadurch gekennzeichnet, dass** der Elektromagnet (44) einen Innenpol (47) aufweist, der von einem Spulenkörper (45) umschlossen ist, und das Dämpfungselement (28) am Innenpol (47) und/oder am Spulenkörper (45) befestigt ist.

6. Sperrvorrichtung (30) nach einem der vorhergehenden Ansprüche, **dadurch gekennzeichnet, dass** ein weiteres akustisches Dämpfungselement (29) axial zwischen dem ersten Sperrelement (32) und dem zweiten Sperrelement (34) angeordnet ist, um die Geräuschbildung beim formschlüssigen Ineinandergreifen der beiden Sperrelemente (32, 34) zu vermindern.

7. Sperrvorrichtung (30) nach einem der vorhergehenden Ansprüche, **dadurch gekennzeichnet, dass** das Dämpfungselement (28) als Radius (110) an der axialen Seite (87) des Elektromagneten (44) ausgebildet ist, an dem das zweite Sperrelement (34) axial anschlägt und sich dabei elastisch verformt.

8. Sperrvorrichtung (30) nach einem der vorhergehenden Ansprüche, **dadurch gekennzeichnet, dass** das Dämpfungselement (28) als Folie (96) ausgebildet ist, die insbesondere an der axialen Seite (87) des Elektromagneten (44) oder am zweiten Sperrelement (34) aufgeklebt ist.

9. Sperrvorrichtung (30) nach einem der vorhergehenden Ansprüche, **dadurch gekennzeichnet, dass** die Ringfeder (43) als konische Spiralfeder (99) ausgebildet ist, die die Welle (14) umschließt.

10. Sperrvorrichtung (30) nach einem der vorhergehenden Ansprüche, **dadurch gekennzeichnet, dass** das Dämpfungselement (28) an dem als Ringfeder (43) ausgebildeten Rückstellelement (42) angeformt - insbesondere als elastische Ummantelung (112) ausgebildet ist, und vorzugsweise angespritzt ist.

11. Sperrvorrichtung (30) nach einem der vorhergehenden Ansprüche, **dadurch gekennzeichnet, dass** das Dämpfungselement (28) als hutförmige Kappe (98) ausgebildet ist, die sich insbesondere über die axiale Seite (87) sowohl des Innenpols (47) als auch des Spulenkörpers (45) erstreckt.

12. Sperrvorrichtung (30) nach Anspruch 11, **dadurch gekennzeichnet, dass** der Innenpol (47) mit dem Spulenkörper (45) einen axialen Versatz (49) bildet, an dem sich die hutförmige Kappe (98) radial abstützt und insbesondere die Ringfeder (43) im Bereich des axialen Versatzes (49) an der Kappe (98) anliegt.

13. Sperrvorrichtung (30) nach einem der vorhergehenden Ansprüche, **dadurch gekennzeichnet, dass** das Dämpfungselement (28) aus Teflon gebildet ist, und insbesondere eine axiale Profilierung (101) als Anlagefläche (100) für das zweite Sperrelement (34) aufweist.

14. Sperrvorrichtung (30) nach Anspruch 11, **dadurch gekennzeichnet, dass** der Innenpol (47) zur Antriebswelle (14) hin einen weiteren axialen Fortsatz (51) aufweist, bis zu dem hin sich die hutförmige Kappe (98) radial erstreckt, und insbesondere der Fortsatz (51) auch zur axialen Führung und Zentrierung des zweiten Sperrelements (34) dient.

15. Sperrvorrichtung (30) nach einem der vorhergehenden Ansprüche, **dadurch gekennzeichnet, dass** das zweite Sperrelement (34) eine aus dem Verbundwerkstoff hergestellte Grundplatte (94) aufweist, an der als axialer Formschluss (85) für das erste Sperrelement (32) eine axiale Verzahnung (82, 84) angespritzt ist.

16. Sperrvorrichtung (30) nach einem der vorhergehenden Ansprüche, **dadurch gekennzeichnet, dass** das zweiten Sperrelement (34) axiale Löcher (81) aufweist, in die zur axialen Führung des zweiten Sperrelements (34) axiale Führungsstifte (79) eingreifen, die an der axialen Seite (87) des Elektromagneten (44) angeformt sind.

17. Sperrvorrichtung (30) nach einem der vorhergehenden Ansprüche, **dadurch gekennzeichnet, dass** das zweite Sperrelement (34) als ein Ankerblech (41) ausgebildet ist, das einen magnetischen Rückschluss für den Elektromagneten (44) bildet.

18. Sperrvorrichtung (30) nach einem der vorhergehenden Ansprüche, **dadurch gekennzeichnet, dass** der Elektromagnet (44) im Sperrzustand nicht bestromt ist, wobei das zweite Sperrelement (34) durch das mindestens eine Rückstellelement (42) formschlüssig in das erste Sperrelement (32) gepresst wird, und der Elektromagnet (44) im Drehzustand bestromt ist, um das zweite Sperrelement (34) axial aus dem ersten Sperrelement (32) zu lösen.

19. Sperrvorrichtung (30) nach einem der vorhergehenden Ansprüche, **dadurch gekennzeichnet, dass** im Drehzustand - wenn der Elektromagnet (44) bestromt ist - das zweite Sperrelement (34) und der Elektromagnet (44) axial am Dämpfungselement (28) anliegen.

20. Sperrvorrichtung (30) nach einem der vorhergehenden Ansprüche, **gekennzeichnet, durch** ein Sperrengehäuse (52), das eine Zylinderwand (35) aufweist, die als Polrohr (33) des Elektromagneten (44) ausgebildet ist, und in der Zylinderwand (35) radial gegenüberliegend zu einem Stecker (58) eine radiale Aussparung (76) ausgebildet ist, die fehlenden magnetischen Fluss im Bereich des Steckers 58 ausgleichen soll.

21. Getriebe-Antriebseinheit (10) mit einer Sperrvorrichtung (10) nach einem der vorhergehenden Ansprüche, **dadurch gekennzeichnet, dass** das erste Sperrelement (32) drehbar bezüglich des die Welle (14) lagerndes Gehäuses (16) ausgebildet ist, und sich axial am Sperrengehäuse (52) - insbesondere an einer Anlaufscheibe (60) des Sperrengehäuses (52) - abstützt.

22. Verfahren zum Herstellen einer Getriebe-Antriebseinheit (10) nach dam Anspruch 21 , **dadurch gekennzeichnet, dass** die Sperrvorrichtung (30) zuerst im Gehäuse (16) der Getriebe-Antriebseinheit (10) befestigt wird, und anschließend die Welle (14) - insbesondere mit dem Mitnehmer (66) - mit einem spielbehafteten Formschluss in eine zentrale Aussparung (64) des ersten Sperrelements (32) eingeführt wird.

23. Verfahren nach Anspruch 22, **dadurch gekennzeichnet, dass** die Sperrvorrichtung (30) vor dem Einbau in das Gehäuse (16) und vor der Montage der Welle (14) als separate, von dem Sperrengehäuse (52) umschlossene Einheit (31) einfach auf Ihre Funktion überprüfbar ist, wobei das Dämpfungselement (28) zuvor mit den Sperrelementen (32, 34) innerhalb des Sperrengehäuses (52) angeordnet wird.

## Claims

1. Blocking device (30) for blocking a rotational movement of a shaft (14) with respect to a housing (16) of a gearbox drive unit (10), having a first blocking element (32) and a second blocking element (34) which can be displaced with respect to the first blocking element (32) by means of an electromagnet (44) and at least one restoring element (42), the blocking elements (32, 34) engaging into one another in the locking state in the axial direction (15) by means of a positively locking connection (85), **characterized in that** at least one acoustic damping element (28) is arranged axially between the positively locking connection (85) and the electromagnet (44), the damping element (28) being fixed on the axial side (87) of the electromagnet (44) by means of a restoring element (42) which is configured as an annular spring (43).

2. Blocking device (30) according to Claim 1, **characterized in that** the damping element (28) is of annular configuration and encloses the shaft (14).

3. Blocking device (30) according to either of Claims 1 and 2, **characterized in that** the damping element (28) is formed from plastic, in particular from an elastomer.

4. Blocking device (30) according to one of the preceding claims, **characterized in that** the damping element (28) is configured as a damping ring (90) which damps in the axial direction (15), has a circular, D-shaped or X-shaped cross section and is arranged, in particular, in a groove (92) on an axial side (87) of the electromagnet (44).

5. Blocking device (30) according to one of the preceding claims, **characterized in that** the electromagnet (44) has an internal pole (47) which is enclosed by a coil former (45), and the damping element (28) is fastened to the internal pole (47) and/or to the coil former (45).

6. Blocking device (30) according to one of the preceding claims, **characterized in that** a further acoustic damping element (29) is arranged axially between the first blocking element (32) and the second blocking element (34), in order to reduce the formation of noise during the positively locking engagement of the two blocking elements (32, 34) into one another.

7. Blocking device (30) according to one of the preceding claims, **characterized in that** the damping element (28) is configured as a radius (110) on the axial side (87) of the electromagnet (44), against which the second blocking element (34) comes into contact axially and is deformed elastically in the process.

8. Blocking device (30) according to one of the preceding claims, **characterized in that** the damping element (28) is configured as a film (96) which is bonded adhesively, in particular, on the axial side (87) of the electromagnet (44) or on the second blocking element (34).

9. Blocking device (30) according to one of the preceding claims, **characterized in that** the annular spring (43) is configured as a conical helical spring (99) which encloses the shaft (14).

10. Blocking device (30) according to one of the preceding claims, **characterized in that** the damping element (28) is formed integrally on the restoring element (42) which is configured as an annular spring (43), in particular is configured as an elastic encapsulation (112), and is preferably injection-moulded.

11. Blocking device (30) according to one of the preceding claims, **characterized in that** the damping element (28) is configured as a hat-shaped cap (98) which extends, in particular, over the axial side (87) both of the internal pole (47) and of the coil former (45).

12. Blocking device (30) according to Claim 11, **characterized in that** the internal pole (47) forms an axial offset (49) with the coil former (45), on which axial offset (49) the hat-shaped cap (98) is supported radially, and, in particular, the annular spring (43) bears against the cap (98) in the region of the axial offset (49).

13. Blocking device (30) according to one of the preceding claims, **characterized in that** the damping element (28) is formed from Teflon and has, in particular, an axial profiling (101) as bearing face (100) for the second blocking element (34).

14. Blocking device (30) according to Claim 11, **characterized in that** the internal pole (47) has a further axial projection (51) towards the drive shaft (14), up to which further axial projection (51) the hat-shaped cap (98) extends radially, and, in particular, the projection (51) also serves to axially guide and centre the second blocking element (34).

15. Blocking device (30) according to one of the preceding claims, **characterized in that** the second blocking element (34) has a base plate (94) which is produced from a composite material and onto which an axial toothing system (82, 84) is injection-moulded as a positively locking connection (85) for the first blocking element (32).

16. Blocking device (30) according to one of the preceding claims, **characterized in that** the second blocking element (34) has axial holes (81), into which axial guide pins (79) engage for the axial guidance of the second blocking element (34), which axial guide pins (79) are formed integrally on the axial side (87) of the electromagnet (44).

17. Blocking device (30) according to one of the preceding claims, **characterized in that** the second blocking element (34) is configured as an armature plate (41) which forms a back iron for the electromagnet (44).

18. Blocking device (30) according to one of the preceding claims, **characterized in that** the electromagnet (44) is not supplied with current in the blocking state, the second blocking element (34) being pressed into the first blocking element (32) in a positively locking manner by the at least one restoring element (42), and the electromagnet (44) is supplied with current in the rotating state, in order to release the second blocking element (34) axially out of the first blocking element (32).

19. Blocking device (30) according to one of the preceding claims, **characterized in that** the second blocking element (34) and the electromagnet (44) bear axially against the damping element (28) in the rotating state when the electromagnet (44) is supplied with current.

20. Blocking device (30) according to one of the preceding claims, **characterized by** a blocking housing (52) which has a cylinder wall (35) which is configured as a pole tube (33) of the electromagnet (44), and a radial cut-out (76) is formed in the cylinder wall (35) so as to lie radially opposite a plug (58), which radial cut-out (76) is to compensate for absent magnetic flux in the region of the plug (58).

21. Gearbox drive unit (10) having a blocking device (10) according to one of the preceding claims, **characterized in that** the first blocking element (32) is configured so as to be rotatable with regard to the housing (16) which mounts the shaft (14), and is supported axially on the blocking housing (52), in particular on a thrust disc (60) of the blocking housing (52).

22. Method for producing a gearbox drive unit (10) according to Claim 21, **characterized in that** the blocking device (30) is first of all fastened in the housing (16) of the gearbox drive unit (10), and subsequently the shaft (14) is introduced, in particular with the driver (66), into a central cut-out (64) of the first blocking element (32) with a positively locking connection which is affected by play.

23. Method according to Claim 22, **characterized in that**, before the installation into the housing (16) and before the mounting of the shaft (14), the blocking device (30) can have its function tested simply as a separate unit (31) which is enclosed by the blocking housing (52), the damping element (28) being arranged previously with the blocking elements (32, 34) within the blocking housing (52).

## Revendications

1. Dispositif de blocage (30) pour bloquer le mouvement rotatif d'un arbre (14) par rapport à un boîtier (16) d'une unité d'entraînement à engrenage (10), comprenant un premier élément de blocage (32) et un deuxième élément de blocage (34), lequel peut coulisser par rapport au premier élément de blocage (32) au moyen d'un électroaimant (44) et d'au moins un élément de rappel (42), les éléments de blocage (32, 34) en position de blocage venant en prise l'un dans l'autre dans le sens axial (15) au moyen d'une fermeture géométrique (85), **caractérisé en ce qu'**au moins un élément d'amortissement acoustique (28) est disposé dans le sens axial entre la fermeture géométrique (85) et l'électroaimant (44), l'élément d'amortissement (28) étant fixé sur le côté axial (87) de l'électroaimant (44) au moyen d'un élément de rappel (42) réalisé sous la forme d'une bague ressort (43).

2. Dispositif de blocage (30) selon la revendication 1, **caractérisé en ce que** l'élément d'amortissement (28) est réalisé en forme d'anneau et entoure l'arbre (14).

3. Dispositif de blocage (30) selon l'une des revendications 1 ou 2, **caractérisé en ce que** l'élément d'amortissement (28) est réalisé en matière plastique, notamment dans un élastomère.

4. Dispositif de blocage (30) selon l'une des revendications précédentes, **caractérisé en ce que** l'élément d'amortissement (28) est réalisé sous la forme d'une bague d'amortissement (90) ayant une section circulaire, en forme de D ou en forme de X qui réalise l'amortissement dans le sens axial (15), lequel est notamment disposé dans une rainure (92) sur un côté axial (87) de l'électroaimant (44).

5. Dispositif de blocage (30) selon l'une des revendications précédentes, **caractérisé en ce que** l'électroaimant (44) présente un pôle intérieur (47) qui est entouré par un corps de bobine (45) et l'élément d'amortissement (28) est fixé sur le pôle intérieur (47) et/ou sur le corps de bobine (45).

6. Dispositif de blocage (30) selon l'une des revendications précédentes, **caractérisé en ce qu'**un élément d'amortissement acoustique (29) supplémentaire est disposé dans le sens axial entre le premier élément de blocage (32) et le deuxième élément de blocage (34) en vue de réduire le bruit produit lors de l'entrée en prise mutuelle par engagement géométrique des deux éléments de blocage (32, 34).

7. Dispositif de blocage (30) selon l'une des revendications précédentes, **caractérisé en ce que** l'élément d'amortissement (28) est réalisé sous la forme d'un rayon (110) sur le côté axial (87) de l'électroaimant (44) sur lequel vient buter le deuxième élément de blocage (34) dans le sens axial et se déforme ainsi par effet élastique.

8. Dispositif de blocage (30) selon l'une des revendications précédentes, **caractérisé en ce que** l'élément d'amortissement (28) est réalisé sous la forme d'un film (96) qui est notamment collé sur le côté axial (87) de l'électroaimant (44) ou sur le deuxième élément de blocage (34).

9. Dispositif de blocage (30) selon l'une des revendications précédentes, **caractérisé en ce que** la bague ressort (43) est réalisée sous la forme d'un ressort en spirale (99) qui entoure l'arbre (14).

10. Dispositif de blocage (30) selon l'une des revendications précédentes, **caractérisé en ce que** l'élément d'amortissement (28) est façonné sur l'élément de rappel (42) réalisé sous la forme d'une bague ressort (43), notamment réalisé sous la forme d'un enrobage élastique (112) et de préférence appliqué par pulvérisation.

11. Dispositif de blocage (30) selon l'une des revendications précédentes, **caractérisé en ce que** l'élément d'amortissement (28) est réalisé sous la forme d'un capuchon (98) en forme de chapeau qui s'étend notamment sur le côté axial (87) à la fois du pôle intérieur (47) et du corps de bobine (45).

12. Dispositif de blocage (30) selon la revendication 11, **caractérisé en ce que** le pôle intérieur (47) forme avec le corps de bobine (45) un décalage axial (49) sur lequel le capuchon (98) en forme de chapeau s'appuie dans le sens radial et la bague ressort (43) repose notamment contre le capuchon (98) dans la zone du décalage axial (49).

13. Dispositif de blocage (30) selon l'une des revendications précédentes, **caractérisé en ce que** l'élément d'amortissement (28) est réalisé en téflon et présente notamment un profilage axial (101) faisant office de surface d'appui (100) pour le deuxième élément de blocage (34).

14. Dispositif de blocage (30) selon la revendication 11, **caractérisé en ce que** le pôle intérieur (47) présente en direction de l'arbre d'entraînement (14) un prolongement axial (51) supplémentaire jusqu'auquel le capuchon (98) en forme de chapeau s'étend dans le sens radial et le prolongement (51) sert notamment aussi au guidage axial et au centrage du deuxième élément de blocage (34).

15. Dispositif de blocage (30) selon l'une des revendications précédentes, **caractérisé en ce que** le deuxième élément de blocage (34) présente une plaque de base (94) fabriquée du matériau composite et sur laquelle est appliquée par pulvérisation une denture axiale (82, 84) faisant office de fermeture géométrique axiale (85) pour le premier élément de blocage (32).

16. Dispositif de blocage (30) selon l'une des revendications précédentes, **caractérisé en ce que** le deuxième élément de blocage (34) présente des trous axiaux (81) dans lesquels viennent en prise des goupilles de guidage axial (79) destinées au guidage axial du deuxième élément de blocage (34) et qui sont façonnées sur le côté axial (87) de l'électroaimant (44).

17. Dispositif de blocage (30) selon l'une des revendications précédentes, **caractérisé en ce que** le deuxième élément de blocage (34) est réalisé sous la forme d'une tôle d'induit (41) qui forme un blindage magnétique pour l'électroaimant (44).

18. Dispositif de blocage (30) selon l'une des revendications précédentes, **caractérisé en ce que** l'électroaimant (44) n'est pas alimenté électriquement à l'état bloqué, le deuxième élément de blocage (34) étant comprimé par engagement géométrique dans le premier élément de blocage (32) par l'au moins un élément de rappel (42), et l'électroaimant (44) est alimenté électriquement à l'état de rotation afin de libérer le deuxième élément de blocage (34) hors du premier élément de blocage (32) dans le sens axial.

19. Dispositif de blocage (30) selon l'une des revendications précédentes, **caractérisé en ce qu'**à l'état de rotation, lorsque l'électroaimant (44) est alimenté électriquement, le deuxième élément de blocage (34) et l'électroaimant (44) reposent dans le sens axial contre l'élément d'amortissement (28).

20. Dispositif de blocage (30) selon l'une des revendications précédentes, **caractérisé par** un boîtier de blocage (52) qui présente une paroi cylindrique (35), laquelle est réalisée sous la forme d'un tube polaire (33) de l'électroaimant (44), et un évidement radial (76) qui doit compenser l'absence de flux magnétique dans la zone d'une fiche (58) est réalisé dans la paroi cylindrique (35) en opposition dans le sens radial à la fiche (58).

21. Unité d'entraînement à engrenage (10) comprenant un dispositif de blocage (30) selon l'une des revendications précédentes, **caractérisée en ce que** le premier élément de blocage (32) est réalisé rotatif par rapport au boîtier (16) supportant l'arbre (14) et s'appuie dans le sens axial sur le boîtier de blocage (52), notamment contre une plaque de butée (60) du boîtier de blocage (52).

22. Procédé de fabrication d'une unité d'entraînement à engrenage (10) selon la revendication 21, **caractérisé en ce que** le dispositif de blocage (30) est tout d'abord fixé dans le boîtier (16) de l'unité d'entraînement à engrenage (10) et ensuite l'arbre (14) est introduit, notamment avec l'élément d'entraînement (66), avec une fermeture géométrique présentant un jeu dans un évidement central (64) du premier élément de blocage (32).

23. Procédé selon la revendication 22, **caractérisé en ce que** le fonctionnement du dispositif de blocage (30) peut être contrôlé simplement avant le montage dans le boîtier (16) et avant le montage de l'arbre (14) en tant qu'unité (31) séparée entourée par le boîtier de blocage (52), l'élément d'amortissement (28) étant préalablement disposé à l'intérieur du boîtier de blocage (52) conjointement avec les éléments de blocage (32, 34).
